# EUROPÄISCHE PATENTANMELDUNG

(11) **EP 3 162 693 A1**
(43) Veröffentlichungstag der Anmeldung: **03.05.2017**
(21) Anmeldenummer: 15192393.5
(22) Anmeldetag: 30.10.2015
(51) Int. Cl.: B63B 27/30, B63J 4/00, B63B 27/24, C02F 103/00

(54) **VERFAHREN ZUR ENTSORGUNG VON ABWASSER AUS SCHIFFEN**

(71) Anmelder: WDK Hafen und Lager GmbH, 46562 Voerde (DE)
(72) Erfinder: Dr. Kreyenberg, Heinrich, 40885 Ratingen (DE)
(74) Vertreter: Stenger Watzke Ring

(57) **Zusammenfassung**

Die vorliegenden Erfindung betrifft ein Verfahren zur Entsorgung von Abwasser aus Schiffen bereitzustellen, welches unter Verzicht auf zu installierende Bordklärtechnik arbeiten kann und bei überschaubarem wirtschaftlichem Aufwand eine Erfüllung der Vorschriften ermöglicht, wobei in einem Tank des Schiffes gesammeltes ungeklärtes Abwasser ortsungebunden an ein Entsorgungstankschiff übergeben wird.

## Beschreibung

Die vorliegende Erfindung betrifft ein Verfahren zur Entsorgung von Abwasser aus Schiffen, insbesondere Fahrgastschiffen.

Bei großen Schiffen, insbesondere Fahrgastschiffen, ist es nach wie vor Stand der Technik, Abwasser auf See zu verklappen und ggf. einfach abzupumpen. Aufgrund gesetzlicher Bestimmungen ist es in manchen Ländern erforderlich, dass die Schiffe während einer Hafenliegezeit an einer Pier abgepumpt werden.

Bei Fahrgastschiffen können hier jedoch diverse Probleme auftreten.

Nach den jetzt gültigen Normen zur Verbesserung der Wasserqualitäten auf den Wasserstraßen in Europa wurde für den Betrieb von Fahrgastschiffen mit einer Kapazität von 50 und mehr Personen verfügt, dass alle Abwässer, die an Bord produziert werden, nur noch im geklärten Zustand in die Gewässer abgeleitet werden dürfen. Ein unbehandeltes Abwasser in das Gewässer abzuleiten oder abzupumpen wird nunmehr als Gewässerverunreinigung im Sinne des § 324 StGB betrachtet und wird auch entsprechend geahndet. Den Reedereien wird auferlegt, an Bord entweder Bordkläranlagen zu installieren und zu betreiben oder sich anderer technischer Hilfsmittel zu bedienen. Die Reinigungsqualität hat, sofern die Kläranlagen nicht unter die einschlägigen Richtlinen der Europäischen Gemeinschaft hinsichtlich der Abwasserreinigung fallen, den Grenzwerten aus § 14a. 02 - Allgemeines - der BinSchUO zu entsprechen. Nach Ziffer 2 a müssen Bordkläranlagen bei der Typprüfung nennenswerte Grenzwerte einhalten.

Verfahren unter Einsatz von chlorhaltigen Mitteln sind nicht zugelassen. Ebenso unzulässig ist es, häusliche Abwässer zu verdünnen, um auf diese Art eine Reduzierungder spezifischen Belastung und dadurch auch eine Entsorgung zu ermöglichen.

Für die Speicherung, Frischhaltung (sofern erforderlich) und Abgabe des Klärschlamms sind ausreichende Vorkehrungen zu treffen. Hierzu gehört auch ein Managementplan für die Klärschlämme.

Die Einhaltung der Grenzwerte wird durch eine Typprüfung bestätigt und durch eine Typgenehmigung festgestellt. Die Typgenehmigung wird in einem Typgenehmigungsbogen bescheinigt. Der Eigner oder sein Bevollmächtigter hat dem Antrag auf Untersuchung nach § 2.02 eine Kopie des Typgenehmigungsbogens beizufügen. Eine Kopie des Typgenehmigungsbogens und des Bordkläranlagenparameterprotokolls sind an Bord mitzuführen.

Nach dem Einbau der Bordkläranlage an Bord wird vom Hersteller vor Aufnahme des Regelbetriebs eine Funktionsprüfung durchgeführt.

Nach jeder wesentlichen Änderung einer Bordkläranlage, die sich auf die Abwasserreinigung auswirkt, muss stets eine Sonderprüfung nach § 14a.11 Nummer 3 durchgeführt werden.

Zur Sicherung der Funktionsfähigkeit ist die Bordkläranlage nach den Herstellerangaben regelmäßig zu warten. Ein entsprechender Wartungsnachweis ist an Bord mitzuführen.

Der aktuelle Stand der Technik ist weit entfernt von den gesetzlich vorgesehenen Anforderungsprofilen. Aufgrund von betrieblichen Störpotentialen an Bord von Schiffen (Vibrationen, Wellenschlag, Beschleunigungskräfte etc.) wird eine Bordkläranlage keine verläßliche Technik sein, die eine Gewähr für die Einhaltung vorgegebener Grenzwerte zum Ableiten von vorbehandelten Abwässern übernehmen kann.

Bisher hat keine Werft und kein Bordkläranlagenhersteller eine Garantie für das Funktionieren der Klärprozesse übernehmen können.

Bei Fahrgastschiffen ergeben sich aufgrund ihrer besonderen Einsatzbedingungen zusätzliche Schwierigkeiten, die im Folgenden kurz angedeutet werden.

Die Abgabe der Fäkalwasser aus Hotel- und Fahrgastschiffen ist von mehreren Faktoren abhängig:
- Es müssen in Abhängigkeit der vorhandenen Bunkerkapazitäten und der Fahrrouten geeignete Übergabestellen eingerichtet sein.
- Auf Kanälen und Fließgewässern mit geringem Wasserspiegelschwankungen (< 4 m) können im Bereich von Anlegebrücken Dockingstations eingerichtet werden, um die Fäkalwässer von der Ladeseite abzusaugen.
- Auf Fließgewässern, die eine Wasserspiegelschwankung von mehr als 4 m ausweisen, reicht das Pumpenvakuum nicht, um geodätische Differenzhöhen ab 4 m zum Absaugen zu überwinden.
- Eine Druckleitung zum Abpumpen von Fäkalschlämmen scheidet wegen der möglichen Gefahr, dass Entsorgungsleitungen platzen könnten, aus.
- Die Übergabe des Fäkalwassers kann nur an ausgewiesenen Übergabestellen erfolgen, an denen nicht mit störenden Folgen aus Geruchsemissionen zu rechnen ist und entsprechend groß dimensionierte Vorfluter bereits existieren oder geschaffen werden können.
- Es erscheint gefahrvoll, eine Fäkalschlammübergabe an Fahrgaststeigern, möglichst noch nahe exklusiver Wohnbebauung, planen und einrichten zu wollen.
- Die zu übergebende Menge an Fäkalwasser mittels Pumpen würden in ein Abwasserrohrleitungssystem einfließen und die Kläranlagen stoßweise belasten/überlasten.
- Das Abpumpen durch Saugwagen setzt voraus, dass die Schiffe einen geeigneten und vorinstallierten Fahrgastanleger verfügbar haben. Nur welcher Fahrgast will neben einer mobilen Fäkalleitung die Geruchsbelästigung der Fahrgastbrücke akzeptieren.
- Reiseprogramme werden zusammengestellt, um den Fahrgästen in einem optimalen Reiseprogramm in kürzester Fahrzeit eine Fülle von Impressionen zu bieten.
- Dadurch bedingt werden Liegezeiten für die Besichtigung von Sehenswürdigkeiten unter Ausschluss von technischen Unterbrechungsintervallen geplant.
- Eine Fahrtunterbrechung, möglichst noch in einem Industriehafen, verlängert die Reisezeit und damit die über den Reisepreis durchzureichenden Betriebskosten.
- Die Akzeptanz von technischen Zwischenstopps zur Abgabe von Fäkalabwässern dürfte bei Fahrgästen und Reedereien kaum vorhanden sein.
- Der alternative Einbau von bordeigenen Kläranlagen oder die Ertüchtigung von vorhandenen Kläranlagen hat in der Vergangenheit stets anschaulich gezeigt, dass Schiffe nicht die geeignete Struktur haben, Kläranlagen effizient zu betreiben. Dies ist nicht ein konstruktives, sondern auch ein betriebliches Problem.
- Eine Kläranlage bedarf der Berücksichtigung und Einhaltung prozesstechnischer Parameter. Die Schiffe sind allerdings keine Entsorger sondern Fahrgast- und Hotelanlagen. Die Sicherheit der Gäste kann beispielsweise gefährdet sein, wenn sich Gase als Al-Produkte bei der Klärschlammbehandlung bilden.
- Es ist aktuell weder technisch noch betriebswirtschaftlich umsetzbar, dass bordeigene Kläranlagen mit geschultem Personal besetzt werden können. Allein im Einzugsgebiet des Rheins und seiner Nebengewässer wären ca. 250 betroffene Schiffseinheiten mit nicht am Markt vorhandenem Personal zu bestücken.
- Die betrieblichen Aufwendungen aus Kläranlagentechnik und zusätzlichem Personal wären kostenmäßig in einer kaum erträglichen Größenordnung abzufangen.
- Die Kosten aus dem bordeigenen Kläranlagenbetrieb sind noch durch die Entsorgungskosten für den Klärschlamm zu beaufschlagen.

Schlussendlich würde die Erfüllung der Vorschriften darauf hinauslaufen, dass bei entsprechend großen Schiffen, insbesondere Fahrgastschiffen, Bordkläranlagen bei Investitionen von mehr als 100.000,00 EUR eingebaut werden müssten, die später in einem dreischichtigen Querbetrieb zu überwachen wären.

Ausgehend vom vorbeschriebenen Stand der Technik liegt der vorliegenden Erfindung die **Aufgabe** zugrunde, ein Verfahren zur Entsorgung von Abwasser aus Schiffen bereitzustellen, welches unter Verzicht auf zu installierende Bordklärtechnik arbeiten kann und bei überschaubarem wirtschaftlichem Aufwand eine Erfüllung der Vorschriften ermöglicht.

Zur technischen **Lösung** dieser Aufgabe wird mit der Erfindung ein Verfahren mit den Merkmalen des Anspruchs 1 vorgeschlagen. Weitere Vorteile und Merkmale ergeben sich aus den Unteransprüchen.

Die Erfindung basiert auf dem Vorschlag, in Anlehnhung an die Einsätze der Bilgenentöler und der Bunkerschiffe, eine ambulante Entsorgung der Abwässer durch kleine Tankschiffe zu betreiben.

Durch eine beispielsweise Funk- oder telefonisch gestützte zentrale Entsorgungsdispositionsstelle (vergleichbar mit Taxizentralen) würde das Fahrgastschiff den Entsorgungsbedarf nach Ort, Uhrzeit und Mengenaufkommen anmelden. Die Fahrzeuge könnten bei Einhaltung ihres aktuellen Fahrplans im Fahrbetrieb oder an einer zuvor definierten Anlegestelle miteinander koppeln. Eine Abhängigkeit von Wasserständen ist nicht gegeben.

Per Schwenkkran mit flexiblem Ausleger können über eine Entsorgungspumpleitung die Abwassertanks der Fahrgastschiffe mit dem Zuführrohr eines Entsorgungsfahrzeuges auf der Leeseite verbunden werden. Dadurch wird eine Geruchsimmission zu Lasten der Passagiere weitmöglichst verhindert.

Die Entsorgungsfahrzeuge sind von ihrer Kapazität auszulegen auf Fahrgastschiffe, die mit einer maximalen Passagieranzahl, der Anzahl der möglichen Abwasserspeichertage und einer täglichen Anfallmenge von 200 l je Passagier multipliziert, zu entsorgen wären.

### Beispiel: 200 Personen, 3 Tage Speicherkapazität und 0,2 cbm/d/Pers. ergeben ein Übernahmevolumen von 120 cbm.

Diese Fahrzeug bezogenen Mengen werden sich bei einer Entsorgung von mehreren Fahrgastschiffen im Linienbetrieb auf Strecken mit höherer Verkehrsdichte addieren.

Damit die eingesetzten Entsorgungsfahrzeuge einen störungsfreien ambulanten Entsorgungsbetrieb erfüllen können, ist es vorgesehen, an mengenmäßig abhängigen Konzentrationspunkten, Leichter mit Pufferkapazitäten von mehreren tausend Kubikmetern als Zwischenläger mit Vorbehandlungsanlagen zu positionieren.

Nach bisherigen Erfahrungen können in den auf Reede liegenden Leichtern/Wasserfahrzeugen biologische Vorreinigungsprozesse unter Verwendung von einzublasendem Sauerstoff/Luft ausgeführt werden.

Es besteht die weitere Möglichkeit, eine Fest- /Flüssigtrennung durch Zentrifugen/Separatoren mit und ohne Verwendung von Fällungs- und Flockungshüfsmitteln durchzuführen.

Eine weitere Behandlungsstufe wäre durch den Einsatz von Ultraschallanlagen zur Aufspaltung der mit organischen Substanzen ummantelten Feststoffpartikel möglich.

Je nach Wirtschaftlichkeit der technischen Stufen soll das eingedickte pumpfähige Gemisch letztlich in einen Hafen verbracht werden, um das Feststoffkonzentrat zur weiteren Behandlung einer kommunalen Kläranlage zuzuführen.

Beide vorteilhafte und für sich allein patentfähige verfahrenstechnische Vorschläge betreffen die Vorbehandlung der Abwasser auf den Entsorgungsfahrzeugen. Verfahrenstechnische Klärstufen sind dort einsetzbar und werden im Folgenden beschrieben:
Die Fäkalabwässer aus den schwimmenden Entsorgungsfahrzeugen werden in die auf Reede liegenden Wasserfahrzeuge zur Pufferung mittels geeigneter Pumpen für heterogene Schlamm- und Grobstoffe übergeleitet.

Um den Behandlungsweg nicht zu stören, sollen vorzugsweise selbstreinigende Bogensiebe alle groben Störstoffe abtrennen und Abfallcontainern zuführen. Die von Grobstoffen befreite Schlammfraktion wird einem Einlauf mit einer Beruhigungszone und Barriere für die Abscheidung von Ölen und Fetten aus der Küche zugeleitet. Durch Unachtsamkeit können große Mengen von Fetten aus der Küche oder bei Unfällen auf dem Schiff kann auch Mineralöl in das Abwasser gelangen. Dies wird von der Barriere weitestgehend zurückgehalten.

Das von Fetten und Ölen abgereicherte Abwasser gelangt im Anschluss in ein Belebungsbecken. (Druckluft aus Kompressoren werden über Luftleitungen, die mit Luftdruck- und Mengenregelungen ausgestattet sind, Membranbelüftern zugeführt. Dabei ist die Möglichkeit zur genauen Dosierung der Luftmengen durch geeignete Justierung oder Druckregelung der einzelnen Stränge vorzusehen. Die Belüftung dient zur Sauerstoffversorgung der Bakterien im Belebungsbecken.

Hinter dem/den Belebungsbecken ist ein Absetzbereich mit integriertem Lamellenabscheider zur verbesserten Abscheidung von Belebtschlamm einzurichten.

Mit Hilfe einer Membranpumpe zur Entnahme des Schlamms mit einstellbarer Weiche zur Teilrückführung des Belebtschlammes und zur Entnahme des Überschussschlammes kann der Schlamm schonend gefördert werden. Eine zweite Membranpumpe regelt die Entnahme des Klärablaufs.

Als weitere technische Stufe ist die Installation eines Dekanters zur sicheren Aufbewahrung von restlichem aufschwimmendem Material als auch zur weiteren Eindickung des Überschussschlammes erforderlich. Trotz des eingebauten Lamellenabscheiders besteht bei heftigen Schiffsbewegungen die Gefahr des Aufschwimmens von Klärschlamm.

Zur Unterstützung der Abscheideprozesse ist eine Dosiermöglichkeit für die Zugabe von Flockungshilfsmitteln und/oder Fällungsmitteln vorzusehen. Ebenso sollte die Möglichkeit gegeben sein, das geklärte Abwasser auch über einen Dekanter zu schicken. Hierzu wird eine Ablaufkontrolle, z.B. ein Trübungsmesser o. vergl. einzubauen sein.

Es besteht die Möglichkeit, den Schlamm durch Desintegration weiter zu reduzieren. Hier sollte man allerdings überlegen, ob dieser Verfahrensschritt an Bord oder besser später an Land durchgeführt werden soll.

## Patentansprüche

1. Verfahren zur Entsorgung von ungeklärtem Abwasser aus Schiffen, insbesondere Fahrgastschiffen,
**dadurch gekennzeichnet,**
**dass** in einem Tank des Schiffes gesammeltes ungeklärtes Abwasser ortsungebunden an ein Entsorgungstankschiff übergeben wird.

2. Verfahren nach Anspruch 1, **dadurch gekennzeichnet, dass** das Schiff zur Übergabe des Abwassers im Fahrbetrieb mit dem Entsorgungstankschiff verbunden wird.

3. Verfahren nach Anspruch 1, **dadurch gekennzeichnet, dass** das Schiff zur Übergabe des Abwassers an einer Anlegestelle mit dem Entsorgungstankschiff verbunden wird.

4. Verfahren nach einem der Ansprüche 1 bis 3, **dadurch gekennzeichnet, dass** eine Entsorgungsleitung, insbesondere eine Entsorgungspumpleitung, des Schiffes mit einer Zuführleitung, insbesondere einem Zuführrohr, des Entsorgungstankschiffes verbunden wird.

5. Verfahren nach Anspruch 4, **dadurch gekennzeichnet, dass** die Entsorgungsleitung des Schiffes mittels eines Schwenkkrans in Richtung der Zuführleitung des Entsorgungstankschiffes verschwenkt wird.

6. Verfahren nach einem der Ansprüche 2 bis 5, **dadurch gekennzeichnet, dass** die Übergabe des Abwassers auf der Leeseite des Schiffes erfolgt.

7. Verfahren nach einem der vorhergehenden Ansprüche, **dadurch gekennzeichnet, dass** die Übergabe des Abwassers in Abhängigkeit von Ort, Zeit und/oder Menge des in dem Tank des Schiffes gesammelten Abwassers durch eine zentrale Dispositionsstelle bestimmt wird.

8. Verfahren nach einem der vorhergehenden Ansprüche, **dadurch gekennzeichnet, dass** Wasserfahrzeuge, insbesondere Leichter als zwischenlagernde Entsorgungstankschiffe eingesetzt werden.

9. Verfahren nach Anspruch 8, **dadurch gekennzeichnet, dass** die Abwässer in den Wasserfahrzeugen einer Abwasservorbehandlung unterzogen werden.

10. Verfahren nach Anspruch 9, **dadurch gekennzeichnet, dass** das Abwasser biologisch unter Verwendung von eingebfasenem Sauerstoff und/oder Luft vorbehandelt wird.

11. Verfahren nach Anspruch 9 oder 10, **dadurch gekennzeichnet, dass** das Abwasser mittels einer Zentrifuge, eines Separators oder einer anderen Entwässerungsanlage in eine Fest- und eine Flüssigphase getrennt wird.

12. Verfahren nach einem der Ansprüche 9 bis 11, **dadurch gekennzeichnet, dass** das Abwasser mittels einer Ultraschallanlage vorbehandelt wird.

13. Verfahren nach einem der vorhergehenden Ansprüche, **dadurch gekennzeichnet, dass** das in dem Entsorgungstankschiff befindliche Abwasser in einen Hafen gebracht und von dort zur weiteren Behandlung einer Kläranlage zugeführt wird.
